# EUROPEAN PATENT SPECIFICATION

(11) **EP 1 984 810 B1**
(45) Date of publication and mention of the grant of the patent: **22.03.2017**
(21) Application number: 07756940.8
(22) Date of filing: 13.02.2007
(51) Int. Cl.: G06F 7/533, G06F 7/544

(54) **A BOOTH MULTIPLIER WITH ENHANCED REDUCTION TREE CIRCUITRY**
BOOTH-MULTIPLIZIERER MIT SCHALTKREIS FÜR VERBESSERTE PARTIALPRODUKTREDUKTION
MULTIPLICATEUR À CABINE AVEC CIRCUITERIE D'ARBORESCENCE DE RÉDUCTION AMÉLIORÉE

(30) Priority: 15.02.2006 US 355397; 15.02.2006 US 356359
(43) Date of publication of application: 29.10.2008
(73) Proprietor: QUALCOMM Incorporated, San Diego, CA 92121 (US)
(72) Inventor: KRITHIVASAN, Shankar, Austin, TX 78727 (US); KOOB, Christopher Edward, Round Rock, Texas 78664 (US)
(74) Representative: Tomkins & Co
(86) International application number: PCT/US2007/062082
(87) International publication number: WO 2007/095548

(56) References cited:
- EP-A1- 0 992 885
- EP-A2- 0 497 622
- EP-A2- 0 827 069
- US-A- 4 813 008
- US-A- 6 157 939
- US-B1- 6 463 453

## Description

### RELATED APPLICATIONS

This application is related to co-pending United States Patent Application Serial Number 11/356,359 filed February 15, 2006, and entitled "POWER-EFFICIENT SIGN EXTENSION FOR BOOTH MULTIPLICATION METHODS AND SYSTEMS".

### FIELD

The present invention relates to the field of math processors in digital signal processors, and more particularly, to Booth multipliers used in math processors to perform high speed multiplication of numbers. More specifically, the present invention relates to a multiplier circuit capable of performing operations on operands of various data types and also for signed and un-signed binary values.

### DESCRIPTION OF THE RELATED ART

Increasingly, electronic equipment and supporting software applications involve digital signal processing. Home theatre, computer graphics, medical imaging and telecommunications all rely on digital signal processing technology. Digital signal processing requires fast math in complex, but repetitive algorithms. Many applications require computations in real-time, i.e., the signal is a continuous function of time, which must be sampled and converted to digital, for numerical processing. The processor must execute algorithms performing discrete computations on the samples as they arrive. The architecture of a digital signal processor, or DSP, is optimized to handle such algorithms. The characteristics of a good signal processing engine include fast, flexible arithmetic computation units, unconstrained data flow to and from the computation units, extended precision and dynamic range in the computation units, dual address generators, efficient program sequencing, and ease of programming.

One promising application of DSP technology includes communications systems such as a code division multiple access (CDMA) system that supports voice and data communication between users over a satellite or terrestrial link. The use of CDMA processes in a multiple access communication system is disclosed in U.S. Pat. No. 4,901,307, entitled "SPREAD SPECTRUM MULTIPLE ACCESS COMMUNICATION SYSTEM USING SATELLITE OR TERRESTRIAL REPEATERS," and U.S. Pat. No. 5,103,459, entitled "SYSTEM AND METHOD FOR GENERATING WAVEFORMS IN A CDMA CELLULAR TELEHANDSET SYSTEM," both assigned to the assignee of the claimed subject matter.

A CDMA system is typically designed to conform to one or more telecommunications, and now streaming video, standards. One such first generation standard is the "TIA/EIA/IS-95 Terminal-Base Station Compatibility Standard for Dual-mode Wideband Spread Spectrum Cellular System," hereinafter referred to as the IS-95 standard. The IS-95 CDMA systems are able to transmit voice data and packet data. A newer generation standard that can more efficiently transmit packet data is offered by a consortium named "3^{rd} Generation Partnership Protect" (3GPP) and embodied in a set of documents including Document Nos. 3G TS 25.211, 3G TS 25.212, 3G TS 25.213, and 3G TS 25.214, which are readily available to the public. The 3GPP standard is hereinafter referred to as the W-CDMA standard There are also video compression standards, such as MPEG-1, MPEG-2, MPEG-4, H.263, and WMV (Windows Media Video), as well as many others that such wireless handsets will increasingly employ.

In order to accomplish fast and flexible arithmetic computation units, there is the need to perform high-speed multiplication operations. One process for performing such operations is known as Booth multiplication. Booth multiplication is a process that allows for smaller, faster multiplication circuits, by recoding the numbers that are multiplied. Multiplication, using the Booth process, is typically performed by the generation of partial products. The partial products are then added to obtain the final result. With the Booth multiplication process, the number of partial products equals the number of rows in a multiplier matrix. The term "partial product" refers to a row in the multiplication tree.

There exist numerous modifications to the original Booth's algorithm, but the fundamental principle is to generate fewer partial products using the Booth encoding process. It is possible to reduce the number of partial products by approximately half, by using the process of radix-4 Booth recoding. Radix-4 Booth recording maps the bits of multiplier B, which are originally represented in binary values of 0 and 1 into a set of multiplication factors which can take the values of -2, -1, 0, 1 or 2. This method provides the benefit of approximately halving the number of partial products that would otherwise occur. This is important in circuit design as it relates to the propagation delay in the running of the circuit, and the complexity and power consumption of its implementation.

Once the partial products have been generated using the process of Booth encoding, they are added together by employing reduction techniques. The process of reduction involves summing the multiple rows of partial product bits in a parallel process using half-adders, full-adders and multi-operand adders. This reduction results in two rows of bits said to be in the redundant format, whose sum, when resolved using a carry propagate adder represents the final product. One of these rows is called the Sum *S* and the other row is called Carry *C*. In multiple -accumulate (MAC) operations, the Z term in [Z +(AxB)] is typically included in the reduction tree prior to the final SPA. This process saves on employing CPAs both for the resolution of the multiplication product in the redundant format and for the subsequent accumulation.

Since some partial products may be negative, the hardware required for two's complementation is an aspect of the Booth multiplier. With such hardware, there is a need to provide a Booth multiplier capable of generating the additive inverse of the multiplication product. Presently, no known method or system exists which is capable of generating -(AxB) efficiently for DSP applications. Accordingly, a need exists for a method and system capable of using the Booth multiplication process for generating the additive inverse of the product, -AxB), in DSP applications

Once such a product is generated, however, there is the problem that if the value to be accumulated, "Z" to the product of a multiplication "AxB," is of a higher bit-width than the product AxB, then both the "sum" and "carry" components of the redundant product need to be sign extended appropriately. Sometimes, it may be necessary to perform sign extension over a wide range of bits. There is, accordingly the need for a process of appropriate sign extension during Booth multiplication processes in a DSP US4813008 A discloses a multiplier circuit for obtaining the positive or the negative product of a multiplier and a multiplicand using radix-4 Booth multiplication. EP0827069 A2 describes (see Figure 19) that additional "1"s due to negative multiplication factors of such a Booth multiplication can be absorbed into bits of the partial products in order to reduce the circuit size.

### SUMMARY

Techniques for providing a booth multiplier with enhanced reduction tree circuitry are disclosed, which processes improve both the operation of a digital signal processor and the efficient use of digital signal processor instructions for processing increasingly robust software applications for personal computers, personal digital assistants, wireless handsets, and similar electronic devices, as well as increasing the associated digital signal processor speed and service quality.

Accordingly, the disclosed subject matter provides processes for the design and use of a digital signal processor, including processing transmissions in a communications (e.g., CDMA) system. The disclosed method and system perform improved Booth multiplication in a digital signal processor. The method and system determine a multiplicand, A, that includes a first plurality of bits and a multiplier, B, having a second plurality of bits. The disclosed subject matter performs radix-m, (e.g., radix-4) Booth recording on B to generate a first predetermined integer number, "n," of multiplication factors. The "n" multiplication factors approximate a ratio (e.g., one half, for radix-4 multiplication) of the number of the second plurality of bits. The method and system further generate "n" partial products using the "n" multiplication factors as multipliers of A. Then, a multiplication tree is formed using radix-m Booth encoding In the event of a negative multiplication factor, the disclosure includes forming a two's complement of A by inverting the first plurality of bits of A and associating a sticky "1" to complete the two's complementation. Furthermore, the process involves reducing the multiplication factors in multiple stages of reduction to a set of sum and carry components of a pre-determined length.

These and other advantages of the disclosed subject matter, as well as additional novel features, will be apparent from the description provided herein. The intent of this summary is not to be a comprehensive description of the claimed subject matter, but rather to provide a short overview of some of the subject matter's functionality. Other systems, methods, features and advantages here provided will become apparent to one with skill in the art upon examination of the following **FIGURES** and detailed description. It is intended that all such additional systems, methods, features and advantages be included within this description, be within the scope of the accompanying claims.

### BRIEF DESCRIPTIONS OF THE DRAWINGS

The features, nature, and advantages of the disclosed subject matter will become more apparent from the detailed description set forth below when taken in conjunction with the drawings wherein like reference characters identify correspondingly throughout and wherein:
**FIGURE 1** is a simplified block diagram of a communications system that can implement the present embodiment;
**FIGURE 2** illustrates a DSP architecture for carrying forth the teachings of the present embodiment;
**FIGURE 3** provides an architecture block diagram of one embodiment of a digital signal processor providing the technical advantages of the disclosed subject matter;
**FIGURE 4** presents a data path diagram for various implementations of the disclosed subject matter;
**FIGURE 5** presents a modified 16x16 radix-4 Booth multiplication tree applicable to the disclosed subject matter;
**FIGURE 6** provides a logic cell for implementing the Booth recoder for the disclosed subject matter;
**FIGURE 7** provides a description of the bit grouping for the logic cell of **FIGURE 7** with the disclosed subject matter;
**FIGURE 8** presents a logic cell for implementing Booth recoding logic for the -(AxB) product;
**FIGURE 9** is a table of how the disclosed subject matter handles subtraction in Booth multiplication; and
**FIGURE 10** shows a 16x16 Booth multiplication reduction tree according to further teachings of the disclosed subject matter.

### DETAILED DESCRIPTION OF THE SPECIFIC EMBODIMENTS

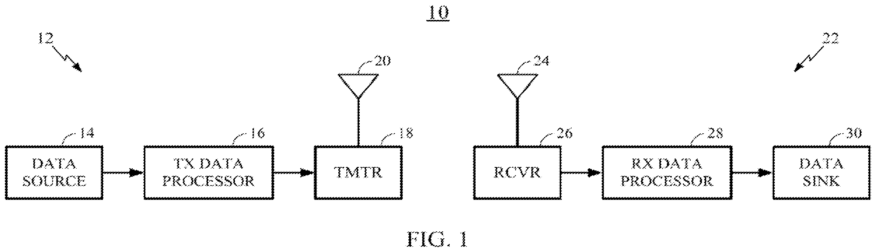

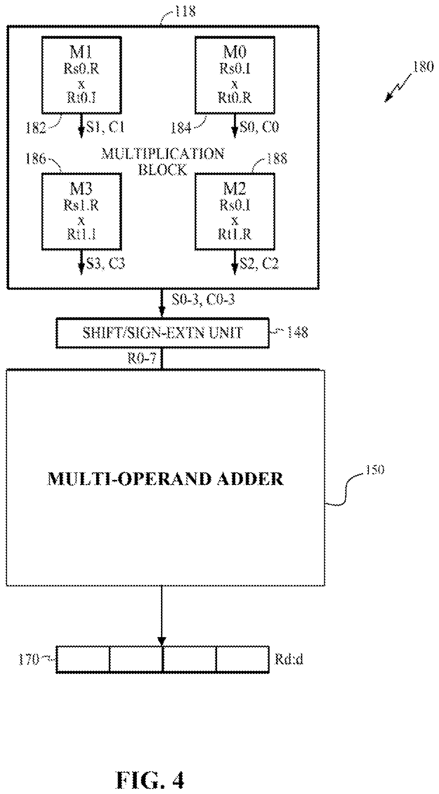

The disclosed subject matter for the modified Booth multiplier here presented has use in a very wide variety of digital signal processing applications, including those involving multi-threaded processing. One such application appears in telecommunications and, in particular, in wireless handsets that employ one or more digital signal processing circuits. Consequently, the following **FIGURES 1** through **3** describe a telecommunications DSP within which the present teachings may be useful. **FIGURE 4** sets forth a data path for multiplication processing within which the present disclosure of an enhanced Booth multiplication operation may operate. Remember, however, that the implementation here described provides but one of a virtually limitless set of applications to which the disclosed subject matter may apply

For the purpose of explaining how such a wireless handset may be used, **FIGURE 1** provides a simplified block diagram of a communications system **10** that can implement the presented embodiments of the disclosed interrupt processing method and system. At a transmitter unit **12**, data is sent, typically in blocks, from a data source **14** to a transmit (TX) data processor **16** that formats, codes, and processes the data to generate one or more analog signals. The analog signals are then provided to a transmitter (TMTR) **18** that modulates, filters, amplifies, and up converts the baseband signals to generate a modulated signal. The modulated signal is then transmitted via an antenna **20** to one or more receiver units.

At a receiver unit **22**, the transmitted signal is received by an antenna **24** and provided to a receiver (RCVR) **26**. Within receiver **26**, the received signal is amplified, filtered, down converted, demodulated, and digitized to generate in phase (I) and (Q) samples. The samples are then decoded and processed by a receive (RX) data processor **28** to recover the transmitted data. The encoding and processing at receiver unit **22** are performed in a manner complementary to the coding and processing performed at transmitter unit **12**. The recovered data is then provided to a data sink **30**.

The signal processing described above supports transmissions of voice, video, packet data, messaging, and other types of communication in one direction. A bidirectional communications system supports two-way data transmission However, the signal processing for the other direction is not shown in **FIGURE 1** for simplicity. Communications system **10** can be a code division multiple access (CDMA) system, a time division multiple access (TDMA) communications system (e.g., a GSM system), a frequency division multiple access (FDMA) communications system, or other multiple access communications system that supports voice and data communication between users over a terrestrial link. In a specific embodiment, communications system **10** is a CDMA system that conforms to the W-CDMA standard.

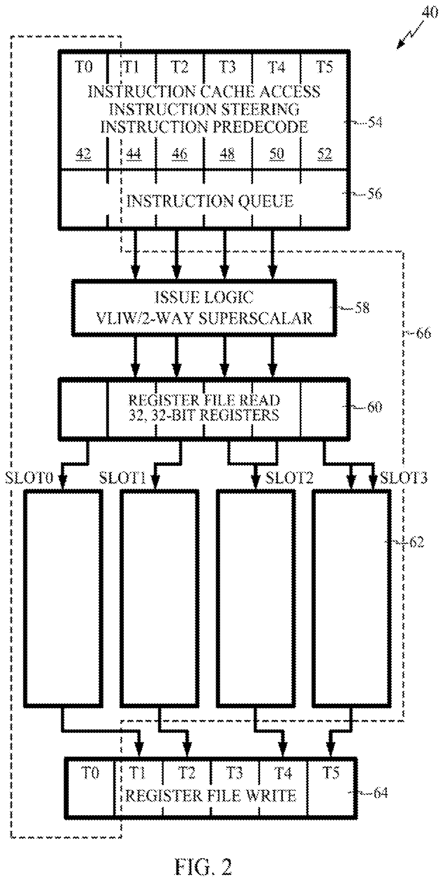

**FIGURE 2** illustrates DSP **40** architecture that may serve as the transmit data processor **16** and receive data processor **28** of **FIGURE 1**. Once more, emphasis is made that DSP **40** only represents one embodiment among a great many of possible digital signal processor embodiments that may effectively use the teachings and concepts here presented. In DSP **40**, therefore, threads **T0:T5** (reference numerals **42** through **52**), contain sets of instructions from different threads. Circuit **54** represents the instruction access mechanism and is used for fetching instructions for threads **T0:T5.** Instructions for circuit **54** are queued into instruction queue **56**. Instructions in instruction queue **56** are ready to be issued into processor pipeline **66** (see bellow). From instruction queue **56**, a single thread, e.g., thread **T0**, may be selected by issue logic circuit **58**. Register file **60** of selected thread is read and read data is sent to execution data paths **62** for **SLOT0** through **SLOT3**. **SLOT0** through **SLOT3**, in this example, provide for the packet grouping combination employed in the present embodiment.

Output from execution data paths **62** goes to register file write circuit **64**, also configured to accommodate individual threads **T0:T5**, for returning the results from the operations of DSP **40**. Thus, the data path from circuit **54** and before to register file write circuit **64** being portioned according to the various threads forms a processing pipeline **66**.

The present embodiment may employ a hybrid of a heterogeneous element processor (HEP) system using a single microprocessor with up to six threads, **T0:T5**. Processor pipeline **66** has six stages, matching the minimum number of processor cycles necessary to fetch a data item from circuit **54** to registers **60** and **64**. DSP **40** concurrently executes instructions of different threads **T0:T5** within a processor pipeline **66**. That is, DSP **40** provides six independent program counters, an internal tagging mechanism to distinguish instructions of threads **T0:T5** within processor pipeline **66**, and a mechanism that triggers a thread switch. Thread-switch overheard varies from zero to only a few cycles.

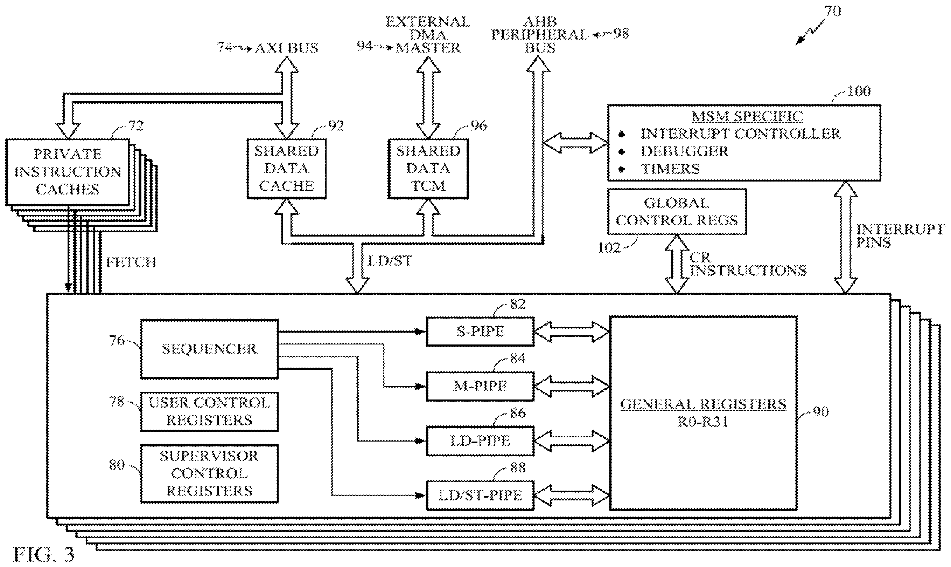

DSP **40**, therefore, provides a general-purpose digital signal processor designed for high-performance and low-power across a wide variety of signal, image, and video processing applications. **FIGURE 3** provides a brief overview of the DSP **40** architecture, including some aspects of the associated instruction set architecture for one manifestation of the disclosed subject matter. Implementations of the DSP **40** architecture support interleaved multithreading (IMT). In this execution model, the hardware supports concurrent execution of multiple hardware threads **T0:T5** by interleaving instructions from different threads in the pipeline. This feature allows DSP **40** to include an aggressive clock frequency while still maintaining high core and memory utilization. IMT provides high throughput without the need for expensive compensation mechanisms such as out-of-order execution, extensive forwarding networks, and so on.

**FIGURE 3**, yet more specifically, provides an architecture block diagram of one embodiment of a programming model for a single thread that may employ the teachings of the disclosed subject matter. Block diagram **70** depicts private instruction caches **72** which receive instructions from AXI Bus **74**, which instructions include mixed 16-bit and 32-bit instructions to sequencer **76**, user control register **78**, and supervisor control register **80** of threads **T0:T5**. Sequencer **76** provides hybrid two-way superscalar instructions and four-way VL1W instructions to S-pipe unit **82**, M-pipe unit **84**, Ld-pipe **86**, and Ld/St-pipe unit **88**. AXI Bus **74** also communicates with shared data cache **90** LD/ST instructions to threads **T0:T5**. With external DMA master **96** shared data TCM **98** communicates LD/ST instructions, which LD/ST instructions further flow to threads **T0:T5**. From AHB peripheral bus **100** MSM specific controller **102** communicates interrupt pins with **T0:T5**, including interrupt controller instructions, debugging instructions, and timing instructions. Global control register **104** communicates control register instructions with threads **T0:T5**.

Within the architecture of the single-thread processing as presented in M-pipe **84** of **FIGURE 3**, high-speed mathematical processing occurs. The timing of multiplication within multiplication block **118** is important to assure that operations of M-pipe **84** properly take place. Similar timing considerations are very likely to exist in any application to which the disclosed subject matter may be applied. Accordingly, the speed with which the Booth multiplication process occurs provides a distinctively novel aspect of the material here disclosed.

In order to satisfy these time constraints, the disclosed subject matter uses Booth multiplication capable of performing the product of two numbers, AxB, or the additive inverse of the product of two numbers, -AxB. In addition, the present disclosure includes a method for including a rounding constant in the booth reduction tree and a sign extension process, which reduces power and area. Moreover, the Booth multiplication processes of the present disclosure may require the partial products to be signed numbers, even if the multiplication is performed on unsigned operands. Since some partial products may be negative, the two's complementation circuitry for performing Booth multiplication allows modification to a conventional Booth multiplier so as to generate the negative value of the multiplication product. The ability to generate -(AxB) efficiently has a great impact on many DSP applications, including operations of the form [Z+-(AxB)]. These multiply accumulate operations, or MAC operations are enabled by the present disclosure.

**FIGURE 4** presents a data path diagram **180** for various implementations of the disclosed subject matter and establishes the data flow within which the present Booth multiplication process may take place. In particular, multiplication block **118** receives **Rs** and **Rt** input. Within multiplication block **118** are multiplication units **M0:M3.** In particular, **M0** multiplier unit **182**, M**1** multiplier unit **184**, M**2** multiplier unit **186**, and **M3** multiplier unit **188** individually receive **Rs** and **Rt** input to generate, respectively, S0C0 (i.e., Sum0 and Carry0), SIC1, S2C2, and S3C3 output to shift/sign-extension unit **148**. Shift/sign-extension unit **148** is responsible for logical shifts and sign extension of these intermediate redundant products.

Multiplier block **118**, therefore, performs the multiplication related instructions for M-pipe **84**. These instructions may be treated as compound instructions which use a 16x16 multiplication process as a basis. The multiplier block consists of four 16x16 multiplier units, **M0:M3**. Each multiplier unit **M0:M3** is capable of functioning in several modes, to support the wide variety of M-type instructions. Signed and unsigned modes are supported. The multipliers can also generate the two's complement of their products, in the case when subtraction needs to be performed on the products.

With the disclosed subject matter, **M0:M3** multipliers **182** through **188** use radix-4 Booth encoding. In the unsigned mode, they resemble a 17x17 multiplier with the extra 17th bit acting as the sign bit. Except for double precision multiplication (*i*.*e*., 32x32 multiplication), all the other multiply instructions are "signed x signed" or "unsigned x unsigned". Computing double precision 32x32 multiplications and 32x16 multiplies using 16x16 multipliers requires "signed x unsigned" and "unsigned x signed" multiplications as well. All of these modes are supported by controlling the sign bits of the multiplicand and the multiplier operands of **M0:M3** multipliers **182** through **188**.

Output from shift/sign-extension unit **148** goes to multi-operand adder **150** and may be parsed into **R0:R3** input. Multi-operand adder 150 receives these **R0:R3** inputs and ultimately, after a set of compression and accumulation stages, provides **Rdd** outputs **170**.

Data path **180** may be understood as divisible into four phases. First of all, in the data routing phase data from the **Rs** and **Rt** source registers are fed to multiplication block **118**. Within multiplication block **118**, 16-bit half-words the source operands are routed to four **M0:M3** multiplier units **182** through **188** based on the instruction. Next, partial product generation and reduction vector addition or subtraction occurs wherein **M0:M3** multiplier units **182** through **188** generate partial products using radix-4 Booth encoding and reduce them using reduction to a redundant pair of outputs.

During the multi-operand reduction phase, the redundant outputs from multiplication block **118** are input to the multi-operand adder which reduces these inputs and an optional accumulator/round value into two pairs of redundant outputs. Finally, in the addition/saturation phase, redundant outputs are resolved using carry propagate addition, and saturation is performed when applicable.

The disclosed subject matter, therefore, provides for the modified Booth multiplication of such values. With such complex values, the inputs have a real 16-bit value in the low halfword and an imaginary 16-bit value in the high halfword. The multiplier results are optionally scaled by 0-1 bits. A rounding constant is added to each real and imaginary sum. The real and imaginary parts are individually saturated to 32 bits. The upper 16-bits of each of the 32-bit results are packed in a 32-bit destination register.

In this example, **S0:S3** and **C0:C3** are 33-bits wide. Even though the output of a 16x16 multiplication can be represented in 32-bits, some instructions operate in an unsigned mode and the extra bit is used in this case as the sign bit to facilitate sign extension. **S0:S3** and **C0:C3** are passed through shift/sign-extension unit **148**. **S0:S1** and **C0:C1** contribute to the lower order 32-bits of the final result, before packing. This forms the real part of the result. These four numbers are optionally scaled by a left shift of 1-bit if specified in the instruction.

The shifted version of these numbers are labeled **R0:R3**. **R0:R3** are passed through multi-operand adder 150. Output from multi-operand adder 150 flows to saturation/addition unit 170.

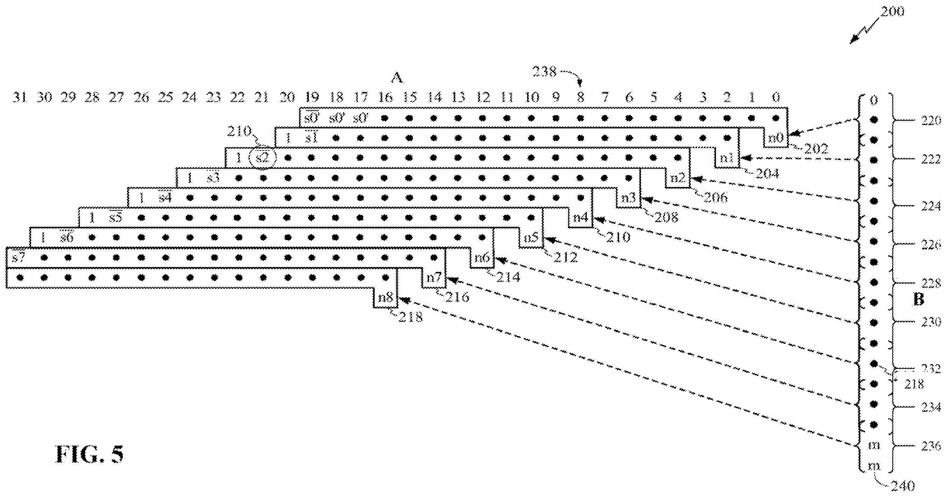

**FIGURE 5** facilitates understanding the Booth multiplication processes of the disclosed subject matter by presenting a modified 16x16 radix-4 Booth multiplication tree applicable to the disclosed subject matter. Dot diagram **200** of **FIGURE 5** conceptual depicts the radix-4 Booth encoding on 16x16 multipliers of the disclosed subject matter, which results in nine partial products **202**, **204**, **206**, **208**, **210**, **212**, **214**, **216**, and **218**. The nine partial products are reduced to two **33**-bit redundant outputs, **S0:S3** and **C0:C3** using a reduction tree consisting of two levels of 3:2 reduction followed by one level of 4:2 compression. Though 32-bits of precision is sufficient for a 16x16 multiplication, the 33rd bit is also preserved to act as a sign bit in the case of unsigned multiplication. An additional carry-out bit from the 33rd column is also output from the multiplier to aid in sign extension.

Referring further to **FIGURE 5**, each partial product row **220** through **236** is a multiple of the multiplicand bits **238**, shown horizontally. Column numbers have been indicated on the top of **FIGURE 5**. The multiplier bits **240** are shown vertically, and these bits are recoded to generate the multiplication factors to form the partial product rows **220** through **236**. The signals n0 through n7 shown in **FIGURE 5** indicate sticky "1"'s which are added to partial product rows **220** through **236** which receive a negative weight. These are sufficient for dealing with multiplication which does not require a final inversion of the product. For handling the case of -(AxB) implicitly in the multiplier, an additional signal n**8** is provided.

The signals s0 through s7 handle sign extension when the product of a multiply operation is subtracted implicitly within the multiplier tree. If A and B are assumed to be the multiplicand and the multiplier, respectively, a radix-4 Booth encoding proceeds by encoding groups of three bits of the multiplier operand B and using this encoding to select partial products from the set {-2A, -A, 0, A, 2A}. Now, if the final product, (AxB) needs to be subtracted, then it is equivalent to adding Ax-(B). The multiplier is modified; now from B to (-B).

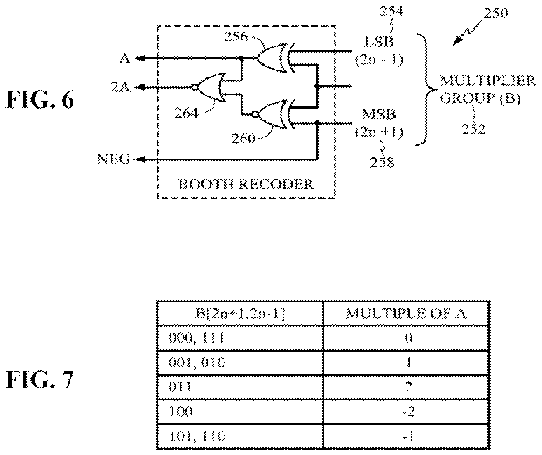

**FIGURE 6** provides a Booth recoder circuit **250** for implementing the disclosed subject matter. Booth recoder cell **250** includes multiplier group input **252** ranging from LSB input **254** at XOR **256** to MSB input **258** at inverter XOR **260**. MSB input **258** also provides "neg" output from Booth recoder circuit **250**. Output from XOR **256** represents the Ax1 signal, A from Booth recoder **250**, as well as provides input to inverter XOR **264.** Output from inverter XOR **260** also provides input to inverter FOR **264** to generate the Ax2 signal, 2A from Booth recoder circuit **250**. XOR **264** provides an output to indicate negation, "neg" from Booth recoder circuit **250.** Thus, Booth recoder circuit **250** examines **3**-bits of the multiplier B and recodes them into the signals "A", "**2**A" and "neg". When subtraction needs to be performed, the "neg" signal is inverted to generate the partial products which will produce the two's complement of the product, AxB.

**FIGURE 7** provides a description of the bit grouping for the logic cell of **FIGURE 6** with the disclosed subject matter. In particular, radix-4 Booth recoding generates nine (9) multiplication factors from the 16-bit multiplier B, which are used as multiples of A, to generate nine (9) partial products. For "n" ranging from 0 to **8**, the table of **FIGURE 7** determines the Booth multiplication factor for bit groups B[2n+1:2n-1]. For the recoding scheme of the present embodiment, B[-1] is assumed to be zero. B[16] and B[17] are zero if B is an unsigned number, and a sign extension of B if B is a signed number, i.e. B[17] = B[16] = B[15]. The multiplication factors are recoded into three (3) signals; A from XOR **256**, **2**A from inverter XOR **264** and "neg" from MSB input **262**. Thus, when the multiplication factor for A is -2, the signals 2A and neg are high. Similarly, for +1, just A will be high, and all three signals will be low for +/- 0. Note, also, that for generating the product AxB, the multiplication factor for the most significant bit group, B[17:15] is always positive. Now, the only possible bit groups for B[17:15] are, [000] or [001] when B is unsigned, and [000] or [111] when B is signed. From **FIGURE 7****,** all these groups lead to a positive multiplication factor. Booth multiplication multiplexers here described, therefore, may select from the set {0, A, 2A} to generate the partial products.

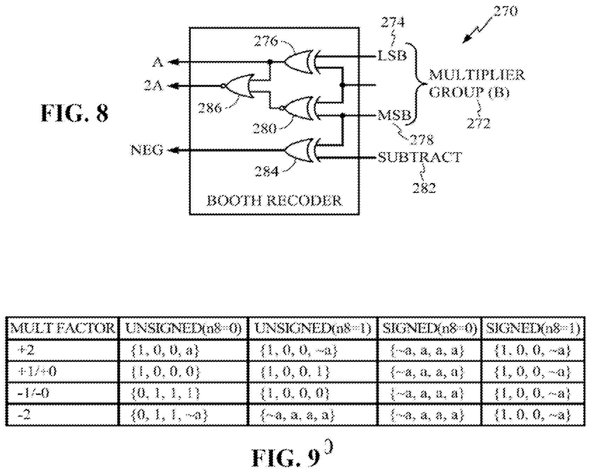

**FIGURE 8** provides a Booth recoder circuit **270** for implementing Booth recoding logic for the -(AxB) product. Booth recoder cell includes multiplier group input **272** ranging from LSB input **274** at XOR **276** to MSB input **278** at inverter XOR **280**. "Subtract" input **282** and MSB input **278** flow to XOR **284.** Output from XOR **276** represents the multiplicand A signal from Booth recoder **270,** as well as provides input to inverter XOR **286.** Output from inverter XOR **280** also provides input to inverter XOR **286** to generate the 2A signal from Booth recoder circuit **270.** XOR **284** provides "new" output from Booth recoder circuit **270.**

**FIGURE 8****,** therefore, takes advantage of the property that the negative value of the product of multiplicand A and multiplier B is obtained by calculating the product of A and the negative value of B. This, therefore, ovoids the known two step process of first calculating the product AxB, and then calculating the two's complement of the product, to get -(AxB). Booth recorder circuit **270** performs the negation in parallel with the stage of multiplication.

The two's complementation of the product utilizes the fact that -(AxB) is equivalent to Ax(-B). In this instance, the operand (-B) is treated as the multiplier. The Booth multiplication factors generated using (-B) as the multiplier are the additive inverses of the corresponding multiplication factors generated using B as the multiplier operand. The Booth multiplication hardware structure used for calculating the product AxB can be reused for calculating Ax(-B) by inverting the signs of each of the Booth multiplication factors. This sign is determined by the "neg" signal of Booth recoder circuit **270,** which is a modification to the recoding hardware for generating the "-neg" signal in negating the product.

Note that in Booth recoder circuit **270** XOR gate **284** is on a non-critical path, and does not contribute to the critical path. Instead, the critical path includes the multiplier bits for producing the signals A and **2**A. This process of inverting the sign of the multiplication factors for partial products introduces cases in which the sign of the last partial product row may be negative. Hence, the signal "n8" may be added to the multiplication tree, as appears in **FIGURE 5****,** above. Adding a row may be reduced by modifying the reduction stage to accommodate an additional row. This, however, may infer an additional delay and associated hardware.

The process presented here does not involve an additional row in the reduction stage, but instead focuses on absorbing the n8 signal into the existing nine rows of partial products by making logical modifications to the multiplication tree. The delay added to the multiplication tree is minimal.

Notation that refers to each "dot" of the form PP_{rom_column} aids in obtaining an understanding of this aspect of the disclosed subject matter. Referring to **FIGURE 9****,** each binary bit (dot) in the multiplication tree has its unique weight and position in the matrix. All bits in the same column have the same weight, and may be reduced in any order as long as the weights are maintained. The rows are numbered from top to bottom starting at 0, and the column are numbered from right to left starting at 0. Using this notation, n8 is equivalent to PP_{10_16}, PP_{0_16}, PP_{0_17}, PP_{0_18} and PP_{0_19} are generated using scaling and sign extension processes known with radix-4 Booth encoding. With such an approach, it is possible to absorb n8 into the multiplication tree. Thus, by analyzing all the possible bit values for PP_{0_16}, PP_{0_17}, PP_{0_18} and PP_{0_19} in both signed and unsigned multiplication modes, the position into which n8 may be inserted is determinable for all possible Booth multiplication factors.

**FIGURE 9** enumerates the range of values for the four most significant bits of partial product row 0, and the effect of adding a signal n8 to this four-bit field. A MUX structure permits selecting the modified value of the four-bit field when n8 is high. In other words, the disclosed process pre-computes the value of the four most significant bits of partial product row 0 if the signal n8 is added at column 16, i.e., P_{0_16}, and uses this modified four-bit field in the reduction stage. The MUX structure is optimized such that once PP_{0_16} (shown as "a" in the table) is calculated using standard Booth multiplexing circuitry. The modified four-bit field based on n8 is resolved with a minimal delay after this. The remainder of the multiplication process is identical to the regular multiplication flow for generating the product AxB.

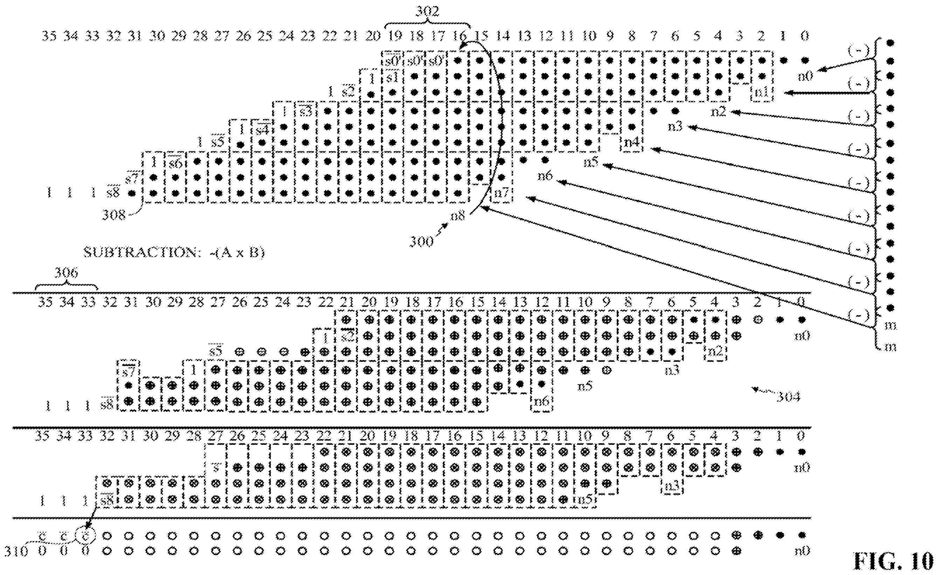

**FIGURE 10** presents a modified 16x16 radix-4 Booth Multiplication tree applicable to further aspects of the disclosed subject matter. From **FIGURE 10****,** it is possible to understand important sign extension and rounding constant functions of the present disclosure. A modification to the reduction stage of the 16x16 multiplier minimizes the critical path through nine partial product rows and provides for sign extension efficiently when the product is available in a redundant sum-carry format. **FIGURE 10** shows modified reduction tree **304** for a 16x16 radix-4 Booth multiplier. Modified reduction tree **304** accommodates signed and unsigned operands and has the potential to negate the product.

The first stage of reduction reduces nine (9) rows to six (6) rows using three (3) rows of full adders. The second stage of reduction reduces six (6) rows to four (4) rows using two (2) rows of full adders. The third and final stage of reduction employs a row of 4:2 multi-operand adders to reduce four (4) rows to the final redundant sum and carry rows. Though 32 bits of sum and carry are sufficient to represent the 16x16 product, an additional bit ensures sign extension is handled correctly for unsigned multiplication

**FIGURE 10** further shows columns **306**, which are higher than just the lower 32 bits forming the product. The present disclosure modifies the Booth multiplication tree from column #32 upward to introduce the sign bit s8 for the last partial product row **308.** This sign bit s8 is not required if the product does not require sign extension. Now, to preserve the correct sign of partial product row 8, the process includes extending partial product row **308** by the one bit. Columns higher than #32 are unaffected until the least stage of reduction. At such point, the signal ~s8 resolves with the carry-out from column #31, and generates a carry-out **310** shown as "c̅".

The final product is formed by adding the carry-out "c̅" **310** to the one-extension from column #33 upwards. The effect is to sign-extend the sum component of the final product with c̅ as the sign, while zero-extending the carry component of the final product. These steps eliminate the need to sign-extend both the sum and carry components. For example, if 16x16 multiplication were part of a MAC operation, which required an accumulation of a 64-bit value to the 32-bit product, then it would be required to sign-extend the 32-bis product to 64-bits before adding it to the 64-bit number. If the intermediate 32-bit product was left in the redundant form, and the sign extension process here presented is applied, significant power savings may arise because of the possibility of eliminating the MUXes used to sign-extend the carry component over 31-bits.

Referring again to **FIGURE 10****,** the present disclosure further provides the ability to add a rounding constant to the multiplier, B. A rounding constant typical to 16x16 multiplications in DIP operations is 0x8000. Rounding the product of a 16x16 multiplication is a common operation, which is typically performed as a two step operation, wherein the multiplier is first used to generate the product, and then the rounding constant is added to the product.

Using the notation explained above, note in **FIGURE 10** that PP_{8_15} is 0. By inserting a "1" in this bit position in the multiplication matrix, it is possible to generate the same result that would have been obtained by first generating the product and then adding to the product the value 0x8000. This process also does not add any latency to the critical path.

If the hardware in multiplication block **118** is limited to the capability of just being able to add one accumulate-operand to the product of a multiplication, then it is common to MUX the rounding constant with the accumulate-operand when the product of a multiplication is required to be rounded. This makes it difficult to perform in a single step both rounding and accumulation operations on the product of a multiplication. But, using the process here described eliminates such limitations

In summary, the disclosed subject matter provides processes for the design and use of a digital signal processor, including processing transmissions in a communications (e.g,, CDMA) system. The disclosed method and system includes a booth multiplier with enhanced reduction tree circuitry for performing Booth multiplication in a digital signal processor. The method and system determine a multiplicand, A, that includes a first plurality of bits and a multiplier, B, having a second plurality of bits. The disclosed subject matter performs radix-m, (e.g., radix-4) Booth receding on B to generate a first predetermined integer number, "n," of multiplication factors. The "n" multiplication factors approximate one half of the number of the second plurality of bits. The method and system further generate "n" partial products using the "n" multiplication factors as multipliers of A. Then, a multiplication tree is formed using radix-m Booth encoding, In the event of a negative multiplication factor, the disclosure includes forming a two's complement of A by inverting the first plurality of bits of A and associating a sticky "1" to complete the two's complementation. Furthermore, the process involves reducing the multiplication factors in multiple stages of reduction to a set of sum and carry components of a pre-determined length.

The present disclosure further provides the technical advantages of a modified Booth multiplier that is capable of being used in MAC operations of the form [Z +-(Ax8) + rounding constant]. This multiplier minimizes delay, power, and hardware by (a) negating the booth multiplication factors and absorbing an extra sticky bit into the reduction tree, (b) finding a place to stuff a rounding constant into the reduction tree, and (c) using a sign extension process that only requires the sign extension of the redundant sum

The processing features and functions described herein, moreover, may be implemented in various manners For example, not only may DSP **40** perform the above-described operations, but also the present embodiments may be implemented in an application specific integrated circuit (ASIC), a microcontroller, a microprocessor, or other electronic circuits designed to perform the functions described herein. The foregoing description of the preferred embodiments, therefore, is provided to enable any person skilled in the art to make or use the claimed subject matter. Various modifications to these embodiments will be readily apparent to those skilled in the art, and the generic principles defined herein may be applied to other embodiments without the use of the innovative faculty. Thus, the claimed subject matter is not intended to be limited to the embodiments shown herein but is to be accorded the widest scope consistent with the principles and novel features disclosed herein.

## Claims

1. A method for performing either signed or unsigned modes of Booth multiplication in a digital signal processor, comprising the steps of:
receiving:
a multiplicand, A (238), comprising sixteen bits,
a multiplier, B (240), comprising sixteen bits, and
a subtract input (282) for indicating if the product of the multiplicand and multiplier, A×B, or the additive inverse of the multiplicand and multiplier, -A×B, is required;
performing radix-4 Booth recoding on B to generate nine multiplication factors (220-236);
using the subtract input (282) to invert the sign of each of the multiplication factors generated by the booth recoding if the subtract input (282) indicates that the additive inverse of the multiplicand and the multiplier, -A×B, is required;
generating nine partial products (202-218) disposed in nine rows, using said nine multiplication factors as multipliers of A;
forming a two's complement of a partial product if the sign of the corresponding multiplication factor is negative, by inverting the bits of the partial product and associating a sticky "1" (n0, n1, n2, n3, n4, n5, n6, n7) to complete the two's complementation;
if the additive inverse -AxB is required, absorbing an additional sticky "1" (n8) associated with the most significant partial product into the most significant bits of the least significant partial product (partial product row 0) of the nine partial products, such that an additional row for the additional sticky "1" is avoided;
reducing said nine rows of nine partial products and the associated sticky "1"s (n0, n1, n2, n3, n4, n5, n6, n7) in multiple stages of reduction to a set of sum and carry components of a pre-determined length; and
generating, based on the set of sum and carry components, one of the product of A and B or the additive inverse value of the product of A and B, wherein:
the method comprises pre-computing:
a four-bit field for the four most significant bits (302) of the least significant partial product based on the mode of operation of the multiplier and the multiplication factor associated with the least significant partial product; and
a modified four-bit field for the four most significant bits (302) of the least significant partial product, the modified four-bit field having values corresponding to the four-bit field with an additional sticky "1" (n8) added thereto;
absorbing the additional sticky "1" (n8) comprises using a multiplexor structure to select the modified four-bit field when the value of the additional sticky "1" (n8) is high ; and
the precomputed four-bit field is resolved based on the calculated value of P_{0_16}, wherein P_{0_16} is the value of the 16^{th} bit of the least significant partial product.

2. The method of Claim 1, further comprising:
for the negative value of the product of A and B, generating a summand of the form [Z + -(AxB)], where Z represents a value to be accumulated in the digital signal processor.

3. The method of Claim 1, further comprising the steps of adding a rounding constant to the multiplication of A and B by inserting a sticky "1" into a predetermined bit of at least one of the partial products.

4. The method of Claim 1, wherein:
said reducing the partial products to a set of sum and carry components of a pre-determined length further comprises reducing the partial products to a plurality of 32-bit sum and carry components.

5. The method of Claim 1 further comprising the steps of:
performing said Booth multiplication process as a part of a 64-bit value accumulation during a MAC operation.

6. A digital signal processor for operation in support of a personal electronics device, said digital signal process composing means for performing Booth multiplication in a digital signal processor in both signed and unsigned modes, the digital signal processor comprising:
means for receiving:
a multiplicand, A (238), comprising sixteen bits,
a multiplier, B (240), comprising sixteen bits, and
a subtract input (282) for indicating if the product of the multiplicand and the multiplier, A×B, or the additive inverse of the multiplicand and the multiplier, - A×B, is required;
means for performing radix-4 Booth recoding on B to generate nine multiplication factors (220-236);
means for using the subtract input (238) to invert the sign of each of the multiplication factors generated by the booth recoding if the subtract input (282) indicates that the additive inverse of the multiplicand and the multiplier, -A×B, is required;
means for generating nine partial products (202-218) disposed in nine rows, using said nine multiplication factors as multipliers of A;
means for forming a two's complement of a partial product if the sign of the corresponding multiplication factor is negative by inverting the bits of the partial product and associating a sticky "1" (n0, n1, n2, n3, n4, n5, n6, n7) to complete the two's complementation;
means for absorbing an additional sticky "1" (n8) associated with the most significant partial product if the additive inverse -AxB is required, into most significant bits of the least significant partial product of the nine partial products, such that an additional row for the additional sticky "1" is avoided;
means for reducing the nine rows of nine partial products and the associated sticky "1"s (n0, n1, n2, n3, n4, n5, n6, n7) in multiple stages of reduction to a set of sum and carry components of a pre-determined length; and
means for generating, based on the set of sum and carry components, one of the product of A and B or the additive inverse value of the product of A and B, wherein:
the means for performing Booth multiplication comprises:
means for pre-computing a four-bit field for the four most significant bits (302) of the least significant partial product based on the mode of operation of the multiplier and the multiplication factor associated with the least significant partial product
and for pre-computing a modified four-bit field for the four most significant bits (302) of the least significant partial product, the modified four-bit field having values corresponding to the four-bit field with an additional sticky "1" (n8) added thereto;
the means for absorbing the associated additional sticky "1" (n8) comprises a multiplexor structure for selecting the modified four-bit field when the value of the additional sticky "1" (n8) is high and for resolving
the precomputed four-bit field based on the calculated value of the of P_{0_16}, wherein P_{0_16} is the value of the 16^{th} bit of the least significant partial product.

7. A system comprising the digital signal processor of Claim 6, wherein:
the means for determining comprises processing circuitry;
the means for performing radix-4 Booth encoding comprises a Booth recoder circuit;
the means for generating nine partial products comprises nine multiplier units;
the means for forming a two's complement comprises inverter circuitry; and
the means for reducing comprises reduction circuitry.

8. The system of Claim 7, further comprising:
for the negative value of the product of A and B, accumulation circuitry for generating a summand of the form [Z + -(AxB)], where Z represents a value to be accumulated in the digital signal processor.

9. The system of Claim 7, further comprising:
bit insertion circuitry for adding a rounding constant to the multiplication of A and B by inserting a sticky " 1 " into a predetermined bit of at least one partial product.

10. The system of Claim 7, wherein:
the reduction circuitry is further configured to reduce the partial products to a plurality of 32- bit sum and carry components.

11. The system of Claim 7, further comprising:
circuitry configured to perform said Booth multiplication process as a part of a 64-bit value accumulation during a MAC operation.

12. A computer readable medium comprising program code adapted to carry out the method of any of claims 1-5, when run on a computer.

## Patentansprüche

1. Ein Verfahren zum Durchführen von vorzeichenbehafteten oder vorzeichenlosen Modi einer Booth-Multiplikation in einem digitalen Signalprozessor, wobei das Verfahren die folgenden Schritte aufweist:
Empfangen:
eines Multiplikanden A (238), der sechzehn Bits aufweist,
eines Multiplikators B (240), der sechzehn Bits aufweist, und
einer Subtraktionseingabe (282) zum Angeben, ob das Produkt aus dem Multiplikanden und dem Multiplikator AxB oder das additive Inverse aus dem Multiplikanden und dem Multiplikator -AxB benötigt wird,
Durchführen einer Radix-4-Booth-Umcodierung auf B, um neun Multiplikationsfaktoren (220-236) zu generieren,
Verwenden der Subtraktionseingabe (282), um das Vorzeichen jedes der durch die Booth-Umcodierung generierten Multiplikationsfaktoren umzukehren, wenn die Subtraktionseingabe (282) angibt, dass das additive Inverse aus dem Multiplikanden und dem Multiplikator -AxB benötigt wird,
Generieren von neun Teilprodukten (202-218), die in neun Reihen angeordnet sind, unter Verwendung der neun Multiplikationsfaktoren als Multiplikatoren von A,
Bilden eines Zweierkomplements eines Teilprodukts, wenn das Vorzeichen des entsprechenden Multiplikationsfaktors negativ ist, durch das Invertieren der Bits des Teilprodukts und das Assoziieren einer sticky "1" (n0, n1, n2, n3, n4, n5, n6, n7) für eine Vervollständigung des Zweierkomplements,
wenn das additive Inverse -AxB benötigt wird, Absorbieren einer zusätzlichen sticky "1" (n8), die mit dem höchstwertigen Teilprodukt assoziiert ist, in die höchstwertigen Bits des niedrigstwertigen Teilprodukts (Teilproduktreihe 0) der neun Teilprodukte, sodass eine zusätzliche Reihe für die zusätzliche sticky "1" vermieden wird,
Reduzieren der neun Reihen der neun Teilprodukte und der assoziierten sticky "1"-en (n0, n1 n2, n3, n4, n5, n6, n7) in mehreren Reduktionsstufen zu einem Satz von Summe- und Übertragskomponenten mit einer vorbestimmten Länge, und
Generieren, basierend auf dem Satz von Summe- und Übertragskomponenten, des Produkts aus A und B oder des additiven inversen Werts des Produkts aus A und B,
wobei das Verfahren das Vorberechnen von Folgendem aufweist:
eines Vier-Bit-Felds für die vier höchstwertigen Bits (302) des niedrigstwertigen Teilprodukts basierend auf dem Operationsmodus des Multiplikators und des Multiplikationsfaktors, die mit dem niedrigstwertigen Teilprodukt assoziiert sind, und
eines modifizierten Vier-Bit-Felds für die vier höchstwertigen Bits (302) des niedrigstwertigen Teilprodukts, wobei das modifizierte Vier-Bit-Feld Werte aufweist, die dem Vier-Bit-Feld mit einer dazu hinzugefügten zusätzlichen sticky "1" (n8) entsprechen,
wobei das Absorbieren der zusätzlichen sticky "1" (n8) das Verwenden einer Multiplexerstruktur zum Auswählen des modifizierten Vier-Bit-Felds, wenn der Wert der zusätzlichen sticky "1" (n8) hoch ist, aufweist, und
wobei das vorberechnete Vier-Bit-Feld basierend auf dem berechneten Wert von P_{0_16} aufgelöst wird, wobei P_{0_16} der Wert des 16-ten Bits des niedrigstwertigen Teilprodukts ist.

2. Verfahren nach Anspruch 1, das weiterhin aufweist:
für den negativen Wert des Produkts aus A und B, Generieren eines Summanden der Form [Z + -(AxB)], wobei Z einen in dem digitalen Signalprozessor zu akkumulierenden Wert wiedergibt.

3. Verfahren nach Anspruch 1, das weiterhin die Schritte zum Addieren einer Rundungskonstante zu der Multiplikation von A und B durch das Einfügen einer sticky "1" in ein vorbestimmtes Bit wenigstens eines der Teilprodukte aufweist.

4. Verfahren nach Anspruch 1, wobei:
das Reduzieren der Teilprodukte zu einem Satz aus Summe- und Übertragskomponenten mit einer vorbestimmten Länge weiterhin das Reduzieren der Teilprodukte zu einer Vielzahl von 32-Bit-Summe- und Übertragskomponenten aufweist.

5. Verfahren nach Anspruch 1, das weiterhin die folgenden Schritte aufweist:
Durchführen des Booth-Multiplikationsprozesses als einen Teil einer 64-Bit-Wert-Akkumulation während einer MAC-Operation.

6. Ein digitaler Signalprozessor für eine Operation zur Unterstützung eines persönlichen Elektronikgeräts, wobei der digitale Signalprozessor Mittel zum Durchführen einer Booth-Multiplikation in einem digitalen Signalprozessor in vorzeichenbehafteten und vorzeichenlosen Modi bildet, wobei der digitale Signalprozessor aufweist:
Mittel zum Empfangen:
eines Multiplikanden A (238), der sechzehn Bits aufweist,
eines Multiplikators B (240), der sechzehn Bits aufweist, und
einer Subtraktionseingabe (282) zum Angeben, ob das Produkt aus dem Multiplikanden und dem Multiplikator AxB oder das additive Inverse aus dem Multiplikanden und dem Multiplikator -AxB benötigt wird,
Mittel zum Durchführen einer Radix-4-Booth-Umcodierung auf B, um neun Multiplikationsfaktoren (220-236) zu generieren,
Mittel zum Verwenden der Subtraktionseingabe (238), um das Vorzeichen jedes der durch die Booth-Umcodierung generierten Multiplikationsfaktoren umzukehren, wenn die Subtraktionseingabe (282) angibt, dass das additive Inverse aus dem Multiplikanden und dem Multiplikator -AxB benötigt wird,
Mittel zum Generieren von neun Teilprodukten (202-218), die in neun Reihen angeordnet sind, unter Verwendung der neun Multiplikationsfaktoren als Multiplikatoren von A,
Mittel zum Bilden eines Zweierkomplements eines Teilprodukts, wenn das Vorzeichen des entsprechenden Multiplikationsfaktors negativ ist, durch das Invertieren der Bits des Teilprodukts und das Assoziieren einer sticky "1" (n0, n1, n2, n3, n4, n5, n6, n7) für eine Vervollständigung des Zweierkomplements,
Mittel zum Absorbieren, wenn das additive Inverse -AxB benötigt wird, einer zusätzlichen sticky "1" (n8), die mit dem höchstwertigen Teilprodukt assoziiert ist, in die höchstwertigen Bits des niedrigstwertigen Teilprodukts der neun Teilprodukte, sodass eine zusätzliche Reihe für die zusätzliche sticky "1" vermieden wird,
Mittel zum Reduzieren der neun Reihen der neun Teilprodukte und der assoziierten sticky "1"-en (n0, n1 n2, n3, n4, n5, n6, n7) in mehreren Reduktionsstufen zu einem Satz von Summe- und Übertragskomponenten mit einer vorbestimmten Länge, und
Mittel zum Generieren, basierend auf dem Satz von Summe- und Übertragskomponenten, des Produkts aus A und B oder des additiven inversen Werts des Produkts aus A und B,
wobei die Mittel zum Durchführen der Booth-Multiplikation aufweisen:
Mittel zum Vorberechnen eines Vier-Bit-Felds für die vier höchstwertigen Bits (302) des niedrigstwertigen Teilprodukts basierend auf dem Operationsmodus des Multiplikators und des Multiplikationsfaktors, die mit dem niedrigstwertigen Teilprodukt assoziiert sind, und zum Vorberechnen eines modifizierten Vier-Bit-Felds für die vier höchstwertigen Bits (302) des niedrigstwertigen Teilprodukts, wobei das modifizierte Vier-Bit-Feld Werte aufweist, die dem Vier-Bit-Feld mit einer dazu hinzugefügten zusätzlichen sticky "1" (n8) entsprechen,
wobei die Mittel zum Absorbieren der assoziierten zusätzlichen sticky "1" (n8) eine Multiplexerstruktur zum Auswählen des modifizierten Vier-Bit-Felds, wenn der Wert der zusätzlichen sticky "1" (n8) hoch ist, und zum Auflösen des vorberechneten Vier-Bit-Felds basierend auf dem berechneten Wert von P_{0_16}, wobei P_{0_16} der Wert des 16-ten Bits des niedrigstwertigen Teilprodukts ist, aufweisen.

7. Ein System, das den digitalen Signalprozessor von Anspruch 6 aufweist, wobei:
die Mittel zum Bestimmen einen Verarbeitungsschaltungsaufbau aufweisen,
die Mittel zum Durchführen einer Radix-4-Booth-Codierung eine Booth-Umcodierungsschaltung aufweisen,
die Mittel zum Generieren von neun Teilprodukten neun Multiplikationseinheiten aufweisen,
die Mittel zum Bilden eines Zweierkomplements einen Inverterschaltungsaufbau aufweisen, und
die Mittel zum Reduzieren einen Reduktionsschaltungsaufbau aufweisen.

8. System nach Anspruch 7, das weiterhin aufweist:
für den negativen Wert des Produkts aus A und B, einen Akkumulationsschaltungsaufbau zum Generieren eines Summanden der Form [Z + -(AxB)], wobei Z einen in dem digitalen Signalprozessor zu akkumulierenden Wert wiedergibt.

9. System nach Anspruch 7, das weiterhin aufweist:
einen Biteinfügungsschaltungsaufbau zum Addieren einer Rundungskonstante zu der Multiplikation von A und B durch das Einfügen einer sticky "1" in ein vorbestimmtes Bit wenigstens eines der Teilprodukte.

10. System nach Anspruch 7, wobei:
der Reduktionsschaltungsaufbau weiterhin konfiguriert ist zum Reduzieren der Teilprodukte zu einer Vielzahl von Summe- und Übertragskomponenten.

11. System nach Anspruch 7, das weiterhin aufweist:
einen Schaltungsaufbau, der konfiguriert ist zum Durchführen des Booth-Multiplikationsprozesses als einen Teil einer 64-Bit-Wert-Akkumulation während einer MAC-Operation.

12. Ein computerlesbares Medium, das einen Programmcode aufweist, der ausgebildet ist zum Durchführen des Verfahrens nach einem der Ansprüche 1-5, wenn er auf einem Computer ausgeführt wird.

## Revendications

1. Procédé de mise en oeuvre de soit un mode signé soit un mode non signé de multiplication de Booth dans un processeur de signal numérique, comprenant les étapes ci-dessous consistant à :
recevoir :
un multiplicande, A (238), comportant seize bits ;
un multiplicateur, B (240), comportant seize bits ; et
une entrée de soustraction (282) destinée à indiquer si le produit du multiplicande et du multiplicateur, A*B, ou de l'inverse additif du multiplicande et du multiplicateur, -A*B, est requis ;
mettre en oeuvre un recodage de Booth à base 4 sur B en vue de générer neuf facteurs de multiplication (220-236) ;
utiliser l'entrée de soustraction (282) en vue d'inverser le signe de chacun des facteurs de multiplication générés par le recodage de Booth si l'entrée de soustraction (282) indique que l'inverse additif du multiplicande et du multiplicateur, -A*B, est requis ;
générer neuf produits partiels (202-218) disposés dans neuf lignes, en utilisant lesdits neuf facteurs de multiplication en tant que des multiplicateurs de A ;
former un complément à deux d'un produit partiel si le signe du facteur de multiplication correspondant est négatif, en inversant les bits du produit partiel et en associant un «1» de rappel (n0, n1, n2, n3, n4, n5, n6, n7) afin de compléter la complémentation à deux ;
si l'inverse additif -A*B est requis, absorber un «1» de rappel supplémentaire (n8) associé au produit partiel de poids le plus fort dans les bits de poids le plus fort du produit partiel de poids le plus faible (ligne de produit partiel 0) des neuf produits partiels, de sorte qu'une ligne supplémentaire pour le «1» de rappel supplémentaire est évitée ;
réduire lesdites neuf lignes de neuf produits partiels et les «1» de rappel associés (n0, n1, n2, n3, n4, n5, n6, n7) dans de multiples étages de réduction à un ensemble de composantes de somme et de retenue d'une longueur prédéterminée ; et
générer, sur la base de l'ensemble de composantes de somme et de retenue, un élément parmi le produit de A et B ou la valeur d'inverse additif du produit de A et B, dans lequel :
le procédé comprend l'étape consistant à pré-calculer :
un champ de quatre bits pour les quatre bits de poids le plus fort (302) du produit partiel de poids le plus faible, sur la base du mode d'exploitation du multiplicateur et du facteur de multiplication associé au produit partiel de poids le plus faible ; et
un champ de quatre bits modifié pour les quatre bits de poids le plus fort (302) du produit partiel de poids le plus faible, le champ de quatre bits modifié présentant des valeurs correspondant au champ de quatre bits avec un «1» de rappel supplémentaire (n8) ajouté à celui-ci ;
dans lequel l'étape consistant à absorber le «1» de rappel supplémentaire (n8) comprend l'étape consistant à utiliser une structure de multiplexeur en vue de sélectionner le champ de quatre bits modifié lorsque la valeur du «1» de rappel supplémentaire (n8) est élevée ; et
dans lequel le champ de quatre bits pré-calculé est résolu sur la base de la valeur calculée de P_{0_16}, dans lequel P_{0_16} correspond à la valeur du 16^{ième} bit du produit partiel de poids le plus faible.

2. Procédé selon la revendication 1, comprenant en outre l'étape ci-dessous consistant à :
pour la valeur négative du produit de A et B, générer un opérande de somme de la forme [Z + -(A*B)], où Z représente une valeur destinée à être accumulée dans le processeur de signal numérique.

3. Procédé selon la revendication 1, comportant en outre l'étape consistant à ajouter une constante d'arrondi à la multiplication de A et B en insérant un «1» de rappel dans un bit prédéterminé d'au moins l'un des produits partiels.

4. Procédé selon la revendication 1, dans lequel :
l'étape consistant à réduire les produits partiels à un ensemble de composantes de somme et de retenue d'une longueur prédéterminée comprend l'étape consistant en outre à réduire les produits partiels à une pluralité de composantes de somme et de retenue de 32 bits.

5. Procédé selon la revendication 1, comprenant en outre l'étape ci-dessous consistant à :
mettre en oeuvre ledit processus de multiplication de Booth dans le cadre d'une accumulation de valeurs de 64 bits au cours d'une opération de contrôle MAC.

6. Processeur de signal numérique destiné à fonctionner à l'appui d'un dispositif électronique personnel, ledit traitement de signal numérique constituant des moyens pour mettre en oeuvre une multiplication de Booth dans un processeur de signal numérique, à la fois dans des modes signés et non signés, le processeur de signal numérique comprenant :
un moyen pour recevoir :
un multiplicande, A (238), comportant seize bits ;
un multiplicateur, B (240), comportant seize bits ; et
une entrée de soustraction (282) destinée à indiquer si le produit du multiplicande et du multiplicateur, A*B, ou de l'inverse additif du multiplicande et du multiplicateur, -A*B, est requis ;
un moyen pour mettre en oeuvre un recodage de Booth à base 4 sur B en vue de générer neuf facteurs de multiplication (220-236) ;
un moyen pour utiliser l'entrée de soustraction (238) en vue d'inverser le signe de chacun des facteurs de multiplication générés par le recodage de Booth si l'entrée de soustraction (282) indique que l'inverse additif du multiplicande et du multiplicateur, -A*B, est requis ;
un moyen pour générer neuf produits partiels (202-218) disposés dans neuf lignes, en utilisant lesdits neuf facteurs de multiplication en tant que des multiplicateurs de A ;
un moyen pour former un complément à deux d'un produit partiel si le signe du facteur de multiplication correspondant est négatif, en inversant les bits du produit partiel et en associant un «1» de rappel (n0, n1, n2, n3, n4, n5, n6, n7) afin de compléter la complémentation à deux ;
un moyen pour absorber un «1» de rappel supplémentaire (n8) associé au produit partiel de poids le plus fort, si l'inverse additif -A*B est requis, dans les bits de poids le plus fort du produit partiel de poids le plus faible des neuf produits partiels, de sorte qu'une ligne supplémentaire pour le «1» de rappel supplémentaire est évitée ;
un moyen pour réduire lesdites neuf lignes de neuf produits partiels et les « 1 » de rappel associés (n0, n1, n2, n3, n4, n5, n6, n7) dans de multiples étages de réduction à un ensemble de composantes de somme et de retenue d'une longueur prédéterminée ; et
un moyen pour générer, sur la base de l'ensemble de composantes de somme et de retenue, un élément parmi le produit de A et B ou la valeur d'inverse additif du produit de A et B, dans lequel :
le moyen pour mettre en oeuvre une multiplication de Booth comporte :
un moyen pour pré-calculer un champ de quatre bits pour les quatre bits de poids le plus fort (302) du produit partiel de poids le plus faible, sur la base du mode d'exploitation du multiplicateur et du facteur de multiplication associé au produit partiel de poids le plus faible et pour pré-calculer un champ de quatre bits modifié pour les quatre bits de poids le plus fort (302) du produit partiel de poids le plus faible, le champ de quatre bits modifié présentant des valeurs correspondant au champ de quatre bits avec un «1» de rappel supplémentaire (n8) ajouté à celui-ci ;
dans lequel le moyen pour absorber le «1» de rappel supplémentaire associé (n8) comporte une structure de multiplexeur en vue de sélectionner le champ de quatre bits modifié lorsque la valeur du «1» de rappel supplémentaire (n8) est élevée, et pour résoudre le champ de quatre bits pré-calculé sur la base de la valeur calculée de P_{0_16}, dans lequel P_{0_16} correspond à la valeur du 16^{ième} bit du produit partiel de poids le plus faible.

7. Système comprenant le processeur de signal numérique selon la revendication 6, dans lequel :
le moyen de détermination comporte un montage de circuits de traitement ;
le moyen de mise en oeuvre du codage de Booth à base 4 comporte un circuit de recodage de Booth ;
le moyen de génération de neuf produits partiels comporte neuf unités de multiplicateur ;
le moyen de formation d'un complément à deux comporte un montage de circuits d'inverseur ; et
le moyen de réduction comporte un montage de circuits de réduction.

8. Système selon la revendication 7, comprenant en outre :
pour la valeur négative du produit de A et B, un montage de circuits d'accumulation pour générer un opérande de somme de la forme [Z + -(A*B)], où Z représente une valeur destinée à être accumulée dans le processeur de signal numérique.

9. Système selon la revendication 7, comprenant en outre :
un montage de circuits d'insertion de bits destiné à ajouter une constante d'arrondi à la multiplication de A et B en insérant un «1» de rappel dans un bit prédéterminé d'au moins un produit partiel.

10. Système selon la revendication 7, dans lequel :
le montage de circuits de réduction est en outre configuré de manière à réduire les produits partiels à une pluralité de composantes de somme et de retenue de 32 bits.

11. Système selon la revendication 7, comprenant en outre :
un montage de circuits configuré de manière à mettre en oeuvre ledit processus de multiplication de Booth dans le cadre d'une accumulation de valeurs de 64 bits au cours d'une opération de contrôle MAC.

12. Support lisible par ordinateur comprenant un code de programme apte à mettre en oeuvre le procédé selon l'une quelconque des revendications 1 à 5, lorsqu'il est exécuté sur un ordinateur.
